# EUROPEAN PATENT APPLICATION

(11) **EP 4 621 189 A1**
(43) Date of publication of application: **24.09.2025**
(21) Application number: 25157248.3
(22) Date of filing: 11.02.2025
(51) Int. Cl.: F01C 21/10

(54) **HYDRAULIC MODULE AND ASSEMBLY HAVING SUCH A HYDRAULIC MODULE**

(30) Priority: 27.02.2024 DE 102024105468
(71) Applicant: VALEO EMBRAYAGES, 80009 Amiens (FR)
(72) Inventor: MERKLE, Manuel, 96106 Ebern (DE); SAUTER, Anton, 96106 Ebern (DE); STOESSEL, Roland, 96106 Ebern (DE); GEGNER, Patrick, 96106 Ebern (DE); ROTTENACH, Gerd, 96106 Ebern (DE)
(74) Representative: Valeo Powertrain Systems

(57) **Abstract**

Hydraulic module (10) for a drive unit of a motor vehicle, comprising a hydraulic pump (36), an electric motor (18), an electronics unit (16), a suction opening (52) formed on a pump housing (46) of the hydraulic pump (36), and a delivery outlet (54) located at the end of a delivery riser (56), which is formed on the side of the pump housing (46) remote from the suction opening (52).

Assembly comprising an oil pan (2) and such a hydraulic module (10), whereby the connection socket (30) extends through a connection opening in the bottom of the oil pan (2) and the hydraulic module (10) is screwed to the bottom of the oil pan (2) such that the edge of the suction opening (52) is pressed against the bottom of the oil pan (2).

## Description

The invention relates to a hydraulic module for a drive unit of a motor vehicle and to an assembly comprising an oil pan and such a hydraulic module.

The drive unit is a so-called electric axle, i.e. a unit having at least one electric machine, which is used to drive an expected vehicle. The electric machine is fed oil, in particular in order to cool the winding overhangs of the stator. The oil collecting in the electric machine is then drawn in by means of the hydraulic module and pumped into a collecting container, for example an oil pan.

In the case of sporty vehicles, it is required that the electric machines can be cooled by means of the oil without delay. Accordingly, it must be ensured that there is always a sufficient supply of oil in the collecting container.

The object of the invention is to provide a hydraulic module which ensures this with little complexity.

To achieve this object, according to the invention a hydraulic module for a drive unit of a motor vehicle is provided, comprising a hydraulic pump, an electric motor, an electronics unit, a suction opening formed on a pump housing of the hydraulic pump, and a delivery outlet located at the end of a delivery riser, which is formed on the side of the pump housing remote from the suction opening. The hydraulic module according to the invention does not require any check valves or similar components to ensure that, during a standstill, oil cannot flow through the hydraulic pump and in this way empty the collecting container. Instead, with the delivery riser a geometrically very simple component is used to ensure that, during a standstill, the oil in the collecting container cannot drop below a specific level, namely below the level formed by the height of the delivery riser. The delivery riser can be very slim so that little installation space is required.

The delivery riser can be formed by a housing portion which is integral with the pump housing and by a cover attached thereto, so that few additional components are required.

Reinforcing braces can be attached to the housing portion on the side thereof remote from the cover, so that the mechanical strength of the delivery riser is increased.

The delivery riser preferably has a width which decreases from the pump housing toward the delivery opening. This is advantageous for the mechanical strength, and it also allows the delivery riser to be arranged in the limited installation space between two mutually adjacent electric machines.

According to one embodiment of the invention, a housing is provided which comprises a receptacle, in particular a trough-like portion, for a stator of the electric motor. The receptacle serves as a guide for the stator when the electric motor is being pre-mounted.

A sheet-metal clamp can be provided, by means of which the stator is frictionally fastened in the receptacle, so that the stator can be mounted on the housing with little effort.

According to one embodiment, the housing has a fork-type extension beyond the receptacle, at the ends of which two screw openings are provided and which interacts with the pump housing in a direction perpendicular to the axis of rotation of the electric motor. The fork-type extension allows the pump housing to be frictionally fastened in the collecting container without the need for other, complex fastening possibilities.

The electronics unit can comprise a printed circuit board which extends perpendicularly to the axis of rotation of the electric motor and which is potted in the housing. With this spatial orientation of the printed circuit board, the available space in the collecting container is utilized optimally, in particular if the contour of the printed circuit board or of the housing accommodating the printed circuit board largely corresponds to the contour of the delivery riser. The printed circuit board can then likewise extend into the upwardly narrowing space between the two electric drive machines.

The hydraulic pump preferably forms, together with a rotor of the electric motor, a pre-assembled assembly which is fastened to the housing by means of a latching connection. This pre-assembled assembly can be transported without trouble from after the pre-assembly up to the final mounting in the collecting container, without the risk that individual components detach from one another.

A connection socket can be formed on the housing of the hydraulic module, said connection socket extending on the side of the suction opening. The connection socket preferably extends through an opening on the underside of the collecting container so that, on the outside of the collecting container, a connection plug can be inserted into the connection socket.

A screw opening associated with the connection socket is preferably provided in the housing. The screw opening allows a fastening bolt or the like to be screwed in so that the connection socket, together with a seal associated therewith, can be firmly screwed against the bottom of the collecting container. This ensures the sealing tightness in the region of the passage of the connection socket through the bottom of the collecting container.

According to an embodiment, the stator is at least partially exposed, meaning there is no stator housing. In other words, a fluid can be circulated directly in contact with the stator for lubrication and/or cooling.

The object of the invention is also achieved by means of an assembly comprising an oil pan and a hydraulic module, the hydraulic module having a connection socket and a screw opening associated with the connection socket, wherein the connection socket extends through a connection opening in the bottom of the oil pan and the hydraulic module is screwed to the bottom of the oil pan such that the edge of the suction opening is pressed against the bottom of the oil pan. The oil pan is the collecting container, which here is provided with openings through which the hydraulic module draws in the oil. The suction openings of the hydraulic module are connected, by a component arranged outside the oil pan, to the interior of the electric machine or electric machines, so that the oil can be suctioned there after it has cooled the winding overhangs of the stator or stators.

The stator of the electric motor of the hydraulic module is preferably exposed on the side remote from the receptacle, so that the stator of the electric motor is cooled directly by the oil in the pan.

The invention will be described below with reference to an embodiment which is illustrated in the appended drawings. In said drawings:
- Figure 1 shows a hydraulic module in a perspective view;
- Figure 2 shows the hydraulic module of Figure 1 in an exploded view;
- Figure 3 shows the hydraulic module of Figure 1 in a front view;
- Figure 4 shows the hydraulic module of Figure 1 in a rear view;
- Figure 5 schematically shows the hydraulic module of Figure 1 mounted in an oil pan, in a side view;
- Figure 6 shows the hydraulic module of Figure 1 in a top view;
- Figure 7 shows the hydraulic module of Figure 1 in a bottom view;
- Figure 8 shows a section along the plane VIII-VIII in Figure 4;
- Figure 9 shows a section along the plane IX-IX in Figure 7;
- Figure 10 shows the detail X in Figure 9 on an enlarged scale; and
- Figure 11 shows the detail XI in Figure 7 in an enlarged view.

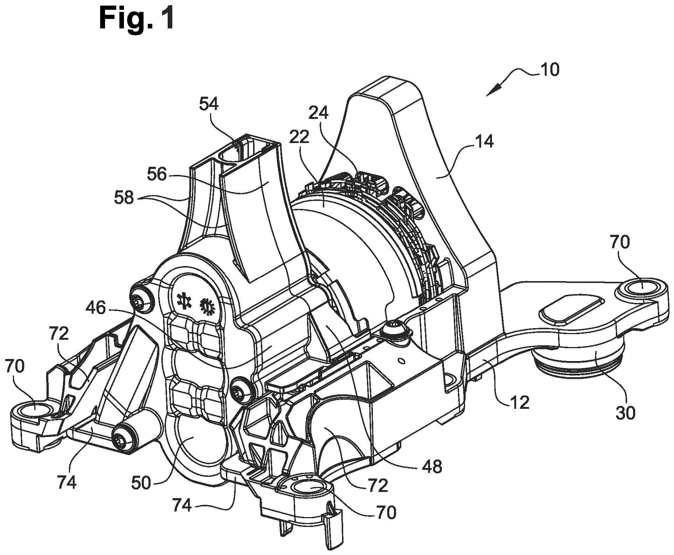

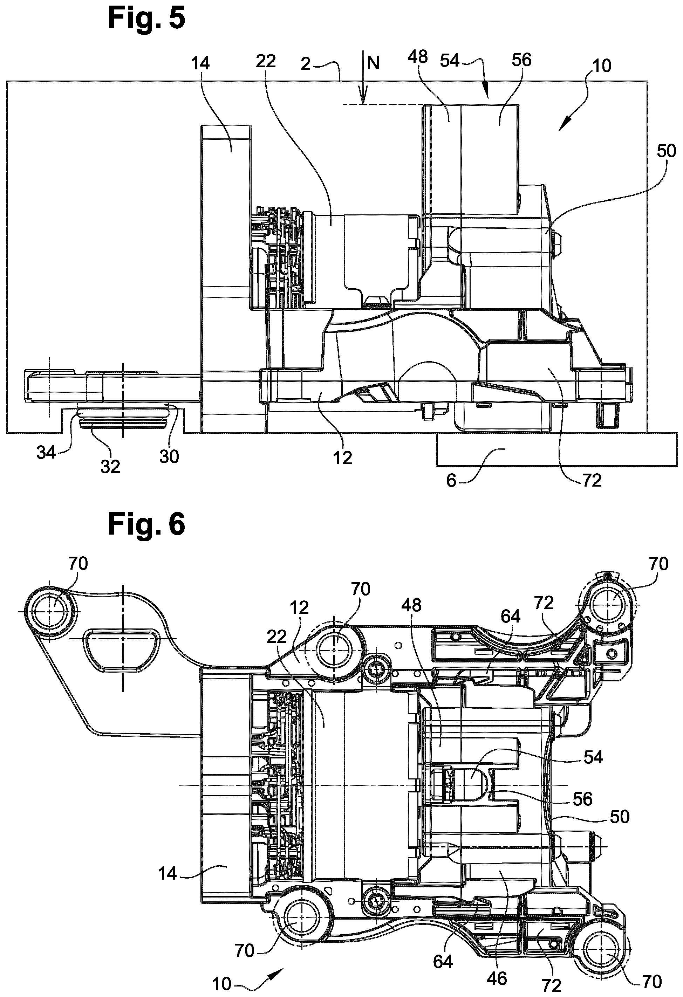

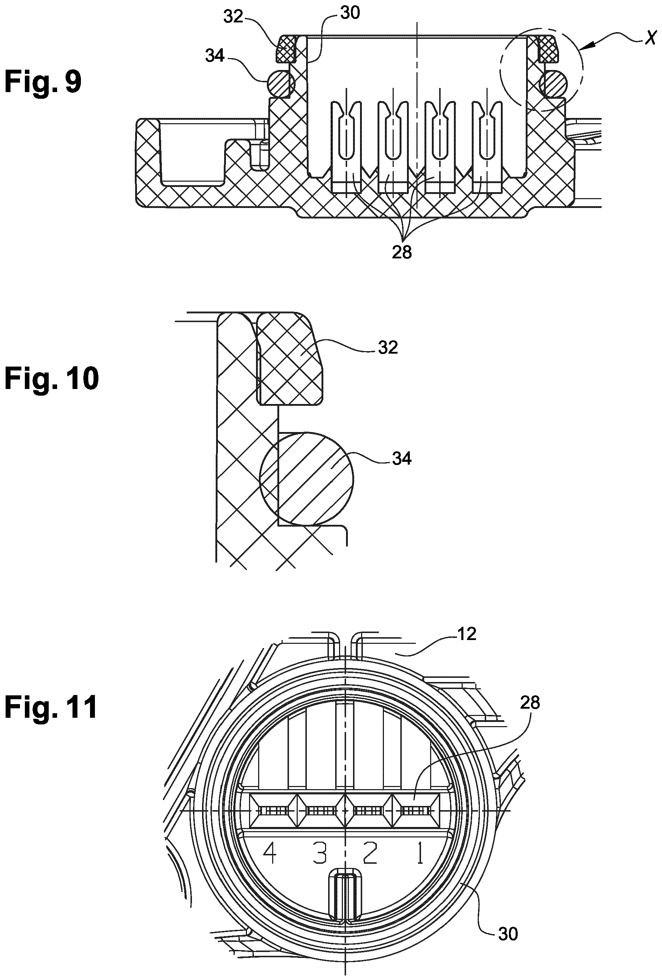

Figures 1 to 11 show a hydraulic module 10, which is provided for being arranged in a collecting container 2 (see Figure 5).

The collecting container 2 (also called "oil pan") is arranged here between two electric machines 4 (hinted at with dashed lines in the figure) and is used to hold an oil supply, which is pumped out of the collecting container 2 to the winding overhangs of the stators of the electric machines 4 by a pump (not shown here). After the oil has cooled the winding overhangs, it collects at the bottom of the housings of the electric machines, from where it is drawn in by the hydraulic module 10 and pumped into the collecting container 2. The connection between the underside of the housings of the electric machines and the collecting container 2, by which connection the hydraulic module 10 draws in the oil, is shown schematically with the reference sign 6 in Figure 5.

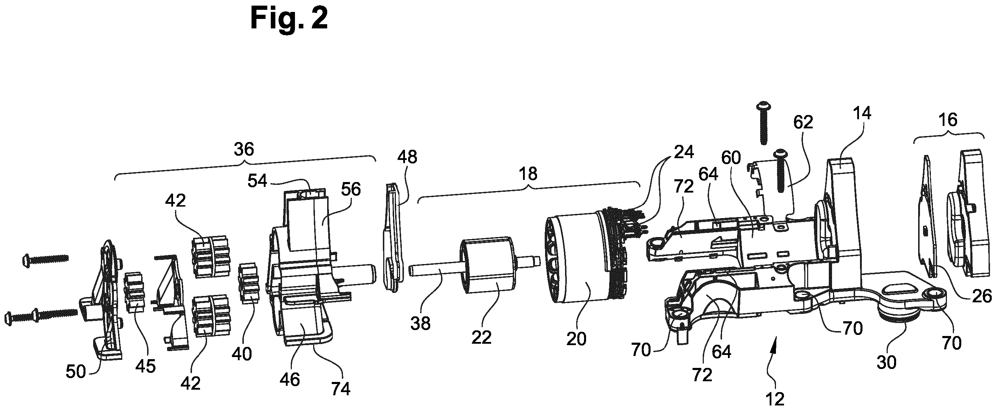

The hydraulic module 10 has a housing 12 (see in particular Figure 2) which is used mainly to mechanically connect the different components of the hydraulic module.

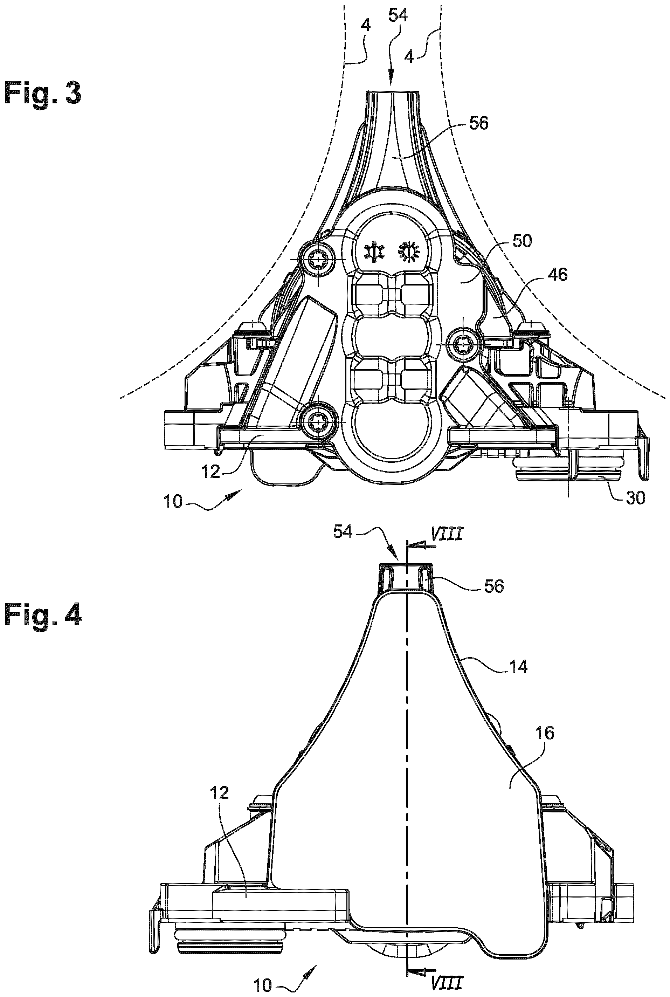

The housing 12 has an electronics housing 14 (see Figure 4), in which an electronics module 16 is accommodated. The electronics module 16 contains the electronic components required to control an electric motor 18.

The electric motor 18 has a stator 20 and a rotor 22. Terminals 24 of the stator 20 extend through openings in the electronics housing 14 up to corresponding conductors of a printed circuit board 26 of the electronics module 16.

Conducting tracks of the printed circuit board 26 are also connected to electrical contacts 28 of a connection socket 30, which is formed on the housing 12.

The connection socket 30 is provided with two seals 32, 34, which are used for sealing in the region of a through-opening through which the connection socket 30 extends from the inside of the collecting container 2 to the outside through an opening (see Figure 5).

The electric motor 18 drives a hydraulic pump 36, which here is in the form of a two-flow double gear pump.

A drive gear 40 which meshes with one set of teeth of two driven double gears 42 is arranged on the shaft 38 for conjoint rotation. The two sets of teeth of the external gears 42 are separated from one another by a central flange 44, and the sets of teeth are slightly offset to one another in the circumferential direction in order to reduce pressure pulsations. A passive central gear 45 is also arranged between the two sets of teeth of the external gears 42.

The gears 40, 42, 45 are arranged in a pump housing 46, which is closed on the side of the electric motor 18 by a cover 48. On the side of the gears 40, 42, 44, an end cover 50 is provided.

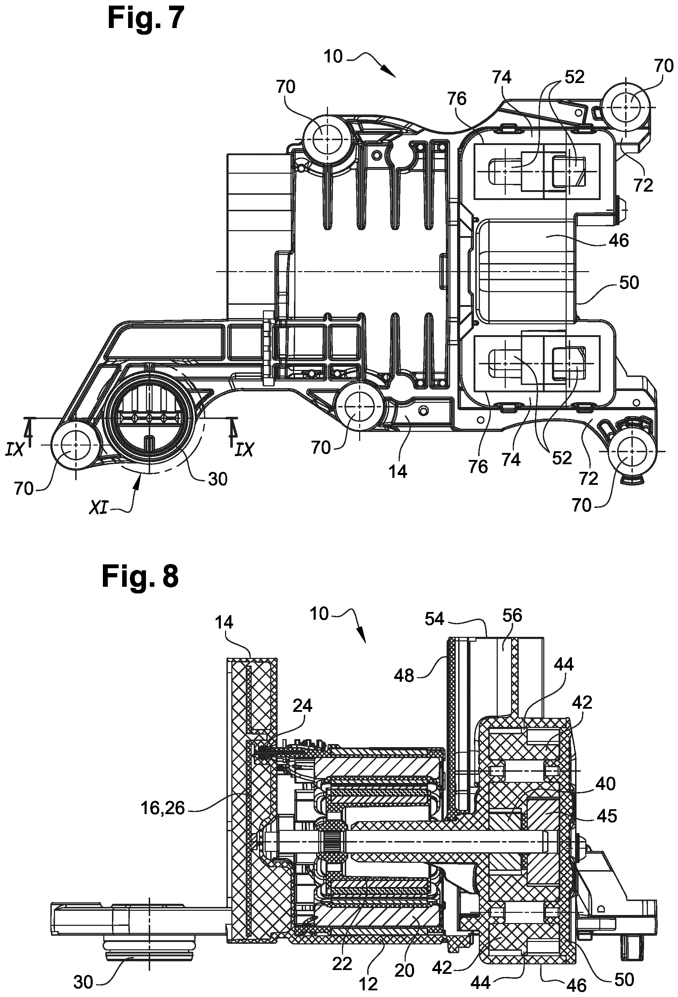

The hydraulic pump 36 draws in through a total of four suction openings 52 (in particular Figure 7), which are provided on the underside of the pump housing 46, i.e. on the same side as the connection socket 30. The suction openings 52 draw in the oil from the interior of the housings of the electric machines 4 via the component 6.

On the delivery side of the hydraulic pump 36, a delivery outlet 54 is provided, which is located at the end of a delivery riser 56.

The delivery riser 56 is formed not only by a housing portion of the pump housing 46 but also by the cover 48 attached to the pump housing 46. As can be seen in the view of Figure 3, the width of the delivery riser 56 decreases in the upward direction toward the delivery outlet 54. The delivery riser 56 can have a curved outer contour which is matched to the outer contour of the electric machines 4.

As can be seen in Figure 5, the hydraulic pump 36 delivers the oil through the delivery outlet 54 freely into the interior of the collecting container. When the pump is at a standstill, the delivery riser 56 ensures that the oil in the collecting container 2 cannot drop below the level N (see Figure 5) defined by the upper edge of the delivery riser 56.

The two components forming the delivery riser 56 are connected to one another by an ultrasonic welding process. For this purpose, two supports 58 which are advantageous for the welding process are attached on the side remote from the cover 48.

The electric motor 18 and the hydraulic pump 36 together form a pre-assembled unit, which is mounted onto the housing 12. For this purpose, the housing 12 has a trough-shaped receptacle 60 which receives the stator 20 of the electric motor 18. In the trough-like receptacle 60, the stator 20 is fastened by means of a sheet-metal clamp 62, which is screwed to the housing 12. To facilitate the mounting, two latching hooks 64 are provided on the housing 12; these latching hooks can interact with the pump housing 46, and they form a latching connection.

The assembly thus pre-assembled is screwed to the bottom of the collecting container 2. For this purpose, the housing 12 has a plurality of screw openings 70, which are distributed such that the desired contact pressure can be generated in the necessary locations.

One screw opening is associated with the connection socket 30, so that sealing can be reliably achieved there. Two additional screw openings 70 are arranged in the region of the receptacle 60 for the stator. Finally, two additional screw openings 70 are arranged at the end of a fork-type extension 72 of the housing 12.

In the assembled state, the fork-type extensions 72 lie above two flange-type wings 74 of the pump housing 46, so that they can press the pump housing against the bottom of the collecting container 2 in the region of the suction openings 52 and thus can press a seal 76, which is shown schematically in Figure 7, against the bottom of the collecting container.

## Claims

1. Hydraulic module (10) for a drive unit of a motor vehicle, comprising a hydraulic pump (36), an electric motor (18), an electronics unit (16), a suction opening (52) formed on a pump housing (46) of the hydraulic pump (36), and a delivery outlet (54) located at the end of a delivery riser (56), which is formed on the side of the pump housing (46) remote from the suction opening (52).

2. Hydraulic module (10) according to claim 1, **characterized in that** the delivery riser (56) is formed by a housing portion which is integral with the pump housing (46) and by a cover (48) attached thereto.

3. Hydraulic module (10) according to claim 2, **characterized in that** supports (58) for an ultrasonic welding process are attached to the housing portion on the side thereof remote from the cover (48).

4. Hydraulic module (10) according to one of the preceding claims, **characterized in that** delivery riser (56) has a width which decreases from the pump housing (46) toward the delivery opening.

5. Hydraulic module (10) according to one of the preceding claims, **characterized in that** a housing (12) is provided which comprises a receptacle (60), in particular a trough-like portion, for a stator (20) of the electric motor (18).

6. Hydraulic module (10) according to claim 5, **characterized in that** a sheet-metal clamp (62) is provided, by means of which the stator (20) is frictionally fastened in the receptacle (60).

7. Hydraulic module (10) according to claim 5 or claim 6, **characterized in that** the housing (12) has a fork-type extension (72) beyond the receptacle (60), at the ends of which two screw openings (70) are provided and which interacts with the pump housing (46) in a direction perpendicular to the axis of rotation of the electric motor (18).

8. Hydraulic module (10) according to one of the preceding claims, **characterized in that** the electronics unit comprises a printed circuit board (26) which extends perpendicularly to the axis of rotation of the electric motor (18) and which is potted in the housing (12).

9. Hydraulic module (10) according to one of the preceding claims, **characterized in that** the hydraulic pump (36) forms, together with a rotor (22) of the electric motor (18), a pre-assembled assembly which is fastened to the housing (12) by means of a latching connection (64).

10. Hydraulic module (10) according to one of the preceding claims, **characterized in that** a connection socket (30) is formed on the housing (12), said connection socket extending on the side of the suction opening (52).

11. Hydraulic module (10) according to claim 10, **characterized in that** a screw opening (70) associated with the connection socket (30) is provided in the housing (12).

12. Hydraulic module (10) according to one of the preceding claims, **characterized in that** the stator (20) is at least partially exposed.

13. Assembly comprising an oil pan (2) and a hydraulic module (10) according to one of claims 10 and 11, **characterized in that** the connection socket (30) extends through a connection opening in the bottom of the oil pan (2) and **in that** the hydraulic module (10) is screwed to the bottom of the oil pan (2) such that the edge of the suction opening (52) is pressed against the bottom of the oil pan (2).

14. Assembly according to claim 12, **characterized in that** the stator (20) is at least partially exposed on the side remote from the receptacle (60).
